# EUROPEAN PATENT APPLICATION

(11) **EP 4 471 730 A1**
(43) Date of publication of application: **04.12.2024**
(21) Application number: 24179181.3
(22) Date of filing: 31.05.2024
(51) Int. Cl.: G06V 10/774, G06V 10/98

(54) **PROCESS OF AUTOMATIC GENERATION OF IMAGES FOR TRAINING A MACHINE LEARNING SYSTEM ASSOCIATED WITH A PRINTING INFRASTRUCTURE**

(30) Priority: 01.06.2023 IT 202300011226
(71) Applicant: Dover Europe Sàrl, 1214 Vernier (CH)
(72) Inventor: ROMITO, Raffaele, 22066 Mariano Comense (CO) (IT)
(74) Representative: PGA S.p.A., Milano, Succursale di Lugano

(57) **Abstract**

The present invention relates to a computer-implemented process for automatic generating a series of training images useful for training a machine learning software operating on a digital printer (20) for detecting errors in digital prints. The process includes the steps of generating a series of initial digital images (2), applying at least one known printing error (3) to each initial image, and automatically tagging at least one known printing error (3) resulting in a series of images (4) with a respective tagged error. It also forms an object of the present invention, a computerized system configured to perform the process for automatically generating training images, as well as a printing infrastructure comprising said computerized system.

## Description

### FIELD OF THE INVENTION

The present invention relates to a process of automatic generation of images for training a machine learning system. For example, the machine learning system may be used for image recognition and may be installed on a controller of a digital printer or on a computer communicatively connectable with said controller. The present invention also relates to a printing infrastructure comprising said controller on which the machine learning system may be installed. The printing infrastructure and process may find application for digital inkjet printing of sheet material, e.g., fibrous material such as fabric and/or non-woven fabric.

### BACKGROUND ART

Digital printers are known for applying inks or paints to sheet materials of different kinds, such as, for example, paper, metal, fabric, non-woven fabric, leather, and more. Such digital printers include one or more printheads for making, on sheet materials, patterns, decorations, colorations, and more. Each printhead has a plurality of nozzles for dispensing ink, which may be subject to frequent clogging or crusting that prevents proper ink dispensing and causes prints to be produced with defects or printing errors. Known digital printers may have computerized systems equipped with systems to recognize defects or printing errors. Such known systems compare images being printed with scans obtained from prints with errors, previously obtained by intentionally tampering the digital printer so that it generates errors.

Although the solution described above allows for the detection of printing errors on sheet materials, the Applicant has noted that this solution shows limitations and drawbacks and is therefore improvable.

### OBJECT OF THE INVENTION

The object of the present invention is therefore to solve at least one of the drawbacks and/or limitations of the preceding solutions.

A first object of the present invention is to provide a printing infrastructure and related process capable of identifying and tagging printing errors automatically.

It is then an object of the present invention to provide a printing infrastructure and related process capable of limiting the waste of sheet material and printing inks.

A further object of the invention is to provide a printing infrastructure and related process with high productivity, which can limit maintenance works and process costs.

These objects and others, which will appear from the following description, are basically achieved by a process for automatic image generation to train a machine learning system and a related printing infrastructure using said system, according to one or more of the following claims and/or aspects.

### SUMMARY

Aspects of the invention are described below.

In a 1st aspect, a computer-implemented process for automatically generating a series of training images is provided, wherein said series of images is configured for training a machine learning system for image recognition, installed on a computerized system of a digital printer (21), said process comprising the steps of:
- generating, or collecting from at least one database of images, a series of initial digital images (2),
- applying to each of said initial images at least a known printing error (3),
- for each of said initial images (2), tagging in an automatic manner at least a known printing error (3) obtaining a series of images (4) with a respective tagged error (also herein referred to as tagged images).

In a 2nd aspect according to the preceding aspect, applying to each of said initial images at least one known printing error (3) includes identifying, optionally in a random manner, in each initial image (2), a selection area (5) where applying the known printing error.

In a 3rd aspect according to the preceding aspect, applying to each of said initial images at least one known printing error (3) includes altering at least a graphic property, optionally the color tone of one or more pixels defining the portion of the image enclosed in the selection area (5), of said selection area (5).

In a 4th aspect according to any one of the two preceding aspects, identifying in each initial image (2), a selection area (5) where applying the error comprises the sub-steps of:
- identifying, in a random manner, a primary pixel (5a) in each of the initial digital images,
- selecting one or more secondary pixels (5b), correlated to each other and to the primary pixel (5a).

In a 5th aspect according to the preceding aspect the step of selecting said one or more secondary pixels (5b) comprises selecting one or more pixels aligned to the primary pixel parallel to a direction of extension (A) of the selection area (5).

In a 6th aspect according to any one of the three preceding aspects, altering at least one graphic property of said selection area (5) includes the steps of:
- analyzing the color tone of the primary and secondary pixels (5a, 5b) comprised in the selection area (5),
- modifying the color tone of one or more of said primary and secondary pixels (5a, 5b) whose color tone has been analyzed for applying the error in the selection area (5).

In a 7th aspect according to the preceding aspect, the step of modifying the color tone of one or more of said primary and secondary pixels (5a, 5b) includes inserting pixels having color tone different from the color tone of the pixels of the initial image (2).

In an 8th aspect according to any one of the preceding aspects tagging at least a known printing error (3) comprises identifying at least one, optionally all, of: typology of the printing error, position with respect to a reference system, extension of the known printing error (3), optionally extension of the selection area (5).

In a 9th aspect according to any one of the preceding aspects, the process includes a step of graphically manipulating each of said images with tagged errors (4) for obtaining from each of said images with tagged errors (4), one or more rendered images (6).

In a 10th aspect according to any one of the preceding aspects from the 1st to the 8th, the process includes a step of graphically manipulating each of said images with tagged errors (4) to obtain from each of said images with tagged errors (4), a plurality of rendered images (6).

In an 11th aspect according to any one of the two preceding aspects each rendered image (6) has realistic properties or has a surface aspect corresponding to the one of a real support where the initial images (2) shall be printed.

In a 12th aspect according to any one of the three preceding aspects, graphically manipulating each of said images with tagged errors (4) includes applying to each of the images an optical map (7a) defining a series of optical properties.

In a 13th aspect according to the preceding aspect, the series of optical properties includes at least one of the following properties: reflection, diffusion, transparency and distortion.

In a 14th aspect according to any one of the preceding aspects from the 9th to the 11th graphically manipulating each of said images with tagged errors (4) includes applying to each of the images a structural map (7b) defining a series of structural properties.

In a 15th aspect according to the preceding aspect, the series of structural properties includes at least one of the following properties: material thickness, roughness and porosity.

In a 16th aspect according to any one of the preceding aspects from the 9th to the 11th graphically manipulating each of said images with tagged errors (4) includes applying to each of the images a material map (7c) defining a series of properties related to the material of the support on which printing may be performed.

In a 17th aspect according to the preceding aspect, the series of properties related to the material of the support on which printing may be performed includes at least one of the following properties: textile material, leather, paper, wood.

In an 18th aspect according to any one of the preceding aspects from the 9th to the 11th, graphically manipulating each of said images with tagged errors (4) includes applying to each of the images a light map (7d) defining a series of illumination properties.

In a 19th aspect according to the preceding aspect, the series of illumination properties includes at least one of the following properties: shading and luminosity.

In a 20th aspect according to any one of the preceding aspects from the 12th to the 19th, graphically manipulating each of said images with tagged errors (4) includes applying to each of said images with tagged errors (4), at least one of the optical map (7a), structural map (7b), material map (7c) and light map (7d), optionally all maps.

In a 21st aspect according to any one of the preceding aspects from the 12th to the 20th, each map is a filter configured treating a sub-region of each image with tagged errors (4).

In a 22nd aspect according to any one of the preceding aspects from the 12th to the 21st, graphically manipulating each of said images with tagged errors (4) through one or more maps, comprises applying sequentially a respective map on adjacent regions of said image with tagged errors (4) until complete coverage of the image with tagged errors (4).

In a 23rd aspect according to any one of the preceding aspects from the 12th to the 22nd, the process includes a step of varying, optionally in a random manner, one or more properties of each series of properties of a respective map, for obtaining from the same image with tagged errors (4) a further rendered image (6).

In a 24th aspect according to any one of the preceding aspects from the 12th to the 23rd, the process includes a step of iterating, for each property of each series of properties of a respective map, the step of graphically manipulating each of said images with tagged errors (4) to obtain from each of said images with tagged errors (4), a plurality of rendered images (6).

In a 25th aspect according to the preceding aspect, the step of iterating includes varying, optionally in a random manner, one or more properties of each series of properties of a respective map for generating from the same image with tagged errors (4), a further rendered image.

In a 26th aspect according to any one of the two preceding aspects the further rendered images (6) obtained by varying the properties of each series of properties of a respective map applied to images with tagged errors (4), are different from each other.

In a 27th aspect according to any one of the preceding aspects, the process includes a step of applying to each of said initial images (2), optionally to each image with tagged errors (4), at least one different known error (9) from a series of different known errors.

In a 28th aspect according to the preceding aspect, the process includes for each of said initial images (2), optionally for each image with tagged errors, a step of tagging the respective different error (9) of said series of different known errors, obtaining a further series of images (8) with the respective different tagged error.

In a 29th aspect according to any one of the two preceding aspects, the process includes a step of graphically manipulating each of said images with different tagged errors (8) for obtaining from each of the images with different tagged errors (8), a plurality of rendered images (6), each of which having realistic properties or having a surface aspect corresponding to the ones of a real support where the images with different tagged errors (8) shall be printed.

In a 30th aspect according to the preceding aspect, graphically manipulating each of said images with different tagged errors (8) includes applying to each of the images with different tagged errors an optical map (7a) defining a series of properties of optics.

In a 31st aspect according to the preceding aspect, the series of optical properties includes at least one of the following properties: reflection, diffusion, transparency and distortion.

In a 32nd aspect according to any one of the three preceding aspects graphically manipulating each of said images with different tagged errors (8) includes applying to each image with different tagged errors (8) a structural map (7b) defining a series of structural properties.

In a 33rd aspect according to the preceding aspect, the series of structural properties includes at least one of the following properties: material thickness, roughness and porosity.

In a 34th aspect according to any one of the preceding aspects from the 29th to the 33rd graphically manipulating each of said images with different tagged errors (8) includes applying to each images with different tagged errors (8) a material map (7c) defining a series of properties related to the material of the support on which printing may be performed.

In a 35th aspect according to the preceding aspect, the series of properties related to the material of the support on which printing may be performed includes at least one of the following properties: textile material, leather, paper, wood.

In a 36th aspect according to any one of the preceding aspects from the 29th to the 35th graphically manipulating each of said images with different tagged errors (8) includes applying to each image with different tagged errors (8) a light map (7d) defining a series of illumination properties.

In a 37th aspect according to the preceding aspect, the series of illumination properties includes at least one of the following properties: shading and luminosity.

In a 38th aspect according to any one of the preceding aspects from the 30th to the 37th, graphically manipulating each of said images with tagged errors (4) includes applying to each of said images with tagged errors (4), at least one of the optical map (7a), structural map (7b), material map (7c) and light map (7d), optionally all maps.

In a 39th aspect according to any one of the preceding aspects from the 30th to the 38th each map is a filter configured for treating a sub-region of each image with different tagged errors (8).

In a 40th aspect according to any one of the preceding aspects from the 30th to the 39th, graphically manipulating each of said images with different tagged errors (8) by means of one or more maps, includes applying sequentially a respective map on adjacent regions of said image with different tagged errors (8) until complete coverage of the image with different tagged errors (8).

In a 41st aspect according to any one of the preceding aspects from the 30th to the 40th, the process includes a step of varying, optionally in a random manner, one or more properties of each series of properties of a respective map to obtain from the same image with different tagged errors (8) a further rendered image.

In a 42nd aspect according to the preceding aspect, the process includes a step of iterating, for each property of each series of properties of a respective map, the step of graphically manipulating each of said images with different tagged errors to obtain from each of said images with different tagged errors, a plurality of rendered images (6) presenting different properties from each other.

In a 43rd aspect according to any one of the two preceding aspects, the process includes a step of iterating, for each property of each series of properties of a respective map, the step of varying, optionally in a random manner, one or more properties of each series of properties of a respective map, to generate from the same image with different tagged errors a further rendered images.

In a 44th aspect according to the preceding aspect the further rendered images (6), obtained by varying the properties of each series of properties of a respective map applied to images with different tagged errors, are different from each other.

In a 45th aspect according to any one of the preceding aspects each image of said series of initial digital images (2) is an image devoid of three-dimensional effects and/or printing errors (3).

In a 46th aspect according to any one of the preceding aspects each image of said series of initial digital images (2) is a flat image.

In a 47th aspect according to any one of the preceding aspects each image of said series of initial digital images (2) has resolution greater than 200 dpi, for example, comprised between 250 dpi and 100000 dpi.

In a 48th aspect according to any one of the preceding aspects each image of said series of initial digital images (2) is a cyclic image having ending zones in proximity of respective sides which proceed with continuity on a respective opposite side.

In a 49th aspect according to any one of the preceding aspects, the series of initial digital images (2) includes a number of images greater than 1000, optionally comprised between 10000 and 100000, different from each other.

In a 50th aspect according to any one of the preceding aspects, generating, or collecting from at least one database of images, a series of initial digital images includes generating, or collecting from at least one database of images, a plurality of series of initial digital images (2).

In a 51st aspect according to any one of the preceding aspects each series of initial digital images (2) of said plurality is obtained by dividing an initial macro-image into units that define a respective initial image (2).

In a 52nd aspect according to any one of the preceding aspects the series of training images is configured to train a machine learning system of a computerized system of an inkjet digital printer for printing on sheet materials, optionally on fabric.

In a 53rd aspect according to any one of the preceding aspects, the process comprises training the machine learning system using the one or more rendered images.

In a 54th aspect according to the 53rd aspect, the inkjet digital printer comprises:
a printing station having one or more printheads configured for ejecting ink on sheet material,
an optical sensor operative downstream of said one or more printheads for generating one or more signals representative of an image printed on the sheet material,
a control unit connected to the optical sensor, wherein the machine learning system is installed on the control unit of the inkjet digital printer or on a computer system communicatively connectable with said control unit,
wherein the process includes:
   receiving by the control unit said one or more signals generated by the optical sensor,
   determining by the control unit one or more image samples of the printed image as a function of the signals received by the optical sensor,
   determining, using the trained machine learning system, an alarm condition depending on said one or more image samples by performing a comparison of said one or more image samples with said one or more rendered images.

In a 55th aspect according to the 54th aspect, subsequent to the determination of the alarm condition, the process provides for identifying, by the control unit, a defective nozzle of said printheads based on said alarm condition and commanding at least one of a deactivation of said defective nozzle and emission of an alarm signal.

In a 56th aspect, a database comprising a plurality of rendered images (6) obtained by applying the process according to any one of the preceding aspects is provided.

In a 57th a computerized system for processing images is provided, including:
- at least one control unit, optionally at least one digital control unit, and
- at least one memory communicatively connected with at least one control unit which stores instructions, optionally in the form of one or more software programs,
wherein said instructions, when executed by said at least one control unit, program the computerized system for processing images to execute the process according to any one of the preceding aspects from the 1st to the 55th.

In a 58th aspect a printing infrastructure is provided, including:
- a database (25) according to the 56th aspect,
- an inkjet digital printer (21) for printing on sheet materials (22), optionally on textile materials, said digital printer (21) comprising:
   ∘ a printing station (26) having one or more printheads (26a) configured to eject ink on the sheet material (22),
   ∘ at least one optical sensor (23), optionally a camera, operating downstream of said one or more printheads (26a) to generate one or more signals representative of an image printed on the sheet material (22),
   ∘ at least one control unit (50) connected to database (25) and configured to receive from said database (25) one or more rendered images (6), wherein the control unit (50) includes a machine learning module (51) trained with said rendered images (6),
wherein said control unit (50) is connected to the optical sensor (23) and configured for:
- receiving said one or more signals generated by the optical sensor (23),
- determining one or more images sampled as a function of the signals received by the optical sensor (23),
- determining an alarm condition as a function of said one or more sampled images.

In a 59th aspect according to the preceding aspect, the control unit (50) is configured to determine the alarm condition after a comparison, performed by the machine learning module (51), among said one or more sampled images with one or more images of said plurality of rendered images (6).

In a 60th aspect according to any one of the two preceding aspects, the infrastructure includes an emitter (24), optionally of visual or sound type, configured for reproducing an alarm signal.

In a 61st aspect according to the preceding aspect, the control unit (50), after the determination of the alarm condition, is configured for:
- commanding in deactivation said one or more printheads (26a), and
- commanding the emitter (24) for the reproduction of the alarm signal.

In a 62nd aspect according to any one of the four preceding aspects, the machine learning module (51) of the control unit (50) includes one or more memories (52) to store said rendered images (6) received from the database (25).

In a 63rd aspect according to any one of the five preceding aspects, the control unit (51), or another control unit of the infrastructure (20), is configured to perform the process according to any one of the preceding aspects from the 1st to the 55th and to, for example periodically or upon receipt of a command, update the database (25) with new rendered images obtained by performing said process.

A 64th aspect concerns a computer implemented process of automatic generation of training images for a machine learning system for image recognition, the machine learning system being usable by a digital inkjet printer,
said process comprising the steps of:
generating, or collecting from at least one database of images, a series of initial digital images,
applying to each of said initial images a known printing error,
automatically tagging the known printing error of each of said initial images obtaining a series of tagged images,
graphically manipulating each of said tagged images and obtaining, from each of the tagged images, one or more rendered images.

In a 65th aspect according to the preceding aspect applying to each of said initial images the known printing error comprises:
identifying, in each initial image, a selection area where applying the known printing error,
altering at least one graphic property of said selection area.

In a 66th aspect according to the preceding aspect identifying, in each initial image, a selection area where applying the error comprises:
identifying a primary pixel in each of the initial digital images,
selecting one or more secondary pixels correlated to each other and to the primary pixel.

In a 67th aspect according to the 66th aspect, the step of selecting said one or more secondary pixels comprises selecting one or more pixels aligned to the primary pixel parallel to a direction of extension of the selection area. In a 68th aspect according to any one of the preceding aspects from the 65th to the 67th, altering the at least one graphic property of said selection area comprises:
analyzing a color tone of the primary and secondary pixels of the selection area,
modifying the color tone of one or more of said primary and secondary pixels whose color tone has been
analyzed by inserting pixels having color tone different from the color tone of the pixels of the initial image.

In a 69th aspect according to any one of the preceding aspects from the 64th to the 68th, tagging at least a known printing error comprises identifying typology of the printing error, and at least one of:
position with respect to a reference system,
extension of the known printing error.

In a 70th aspect according to any one of the preceding aspects from the 64th to the 69th, each of said rendered images having surface aspect corresponding to a real support where the initial images shall be printed.

In a 71st aspect according to any one of the preceding aspects from the 64th to the 70th graphically manipulating each of said tagged images comprises applying to each of the tagged images one or more of the following maps:
an optical map defining a series of optical properties,
a structural map defining a series of structural properties,
a material map defining a series of properties related to the material of the support on which the printing may be performed,
a light map defining a series of illumination properties;
wherein each of said optical map, structural map, material map, light map is a filter configured for treating a sub-region of each tagged image.

In a 72nd aspect according to the preceding aspect graphically manipulating each of said tagged images comprises applying, to each of the tagged images, an optical map defining a series of optical properties, and wherein said series of optical properties comprises at least one of reflection, diffusion, transparency and distortion.

In a 73rd aspect according to the 71st or 72nd aspect graphically manipulating each of said tagged images comprises applying, to each of the tagged images, a structural map defining a series of structural properties, wherein said series of structural properties comprises at least one of thickness, roughness and porosity of the material.

In a 74th aspect according to any one of the preceding aspects from 71st to 73rd, graphically manipulating each of said tagged images comprises applying, to each of the tagged images, a material map defining a series of properties related to the material of the support on which the printing may be performed,
wherein said series of properties related to the material of the support on which the printing may be performed comprises at least one of textile material, leather, paper, wood.

In a 75th aspect according to any one of the preceding aspects from 71st to 74th graphically manipulating each of said tagged images comprises applying, to each of the tagged images, a light map defining a series of illumination properties,
wherein said series of illumination properties comprises at least one of shading and luminosity.

In a 76th aspect according to any one of the preceding aspects from 71st to 75th graphically manipulating each of said tagged images comprises sequentially applying a respective of said optical map, structural map, material map, light map on adjacent regions, of said tagged image, until complete coverage of the tagged image.

In a 77th aspect according to any one of the preceding aspects from 71st to 76th the process comprises:
iterating, for each property of each series of properties of a respective of said maps, the steps of:
   graphically manipulating each of said tagged images for obtaining, from each of the tagged images, a plurality of rendered images, and
   varying one or more properties of each series of properties of a respective of said maps, for generating from the same tagged image, a further rendered image,
wherein the further rendered images, obtained varying the properties of each series of properties of a respective of said maps applied to tagged images, are different to each other.

In a 78th aspect according to any one of the preceding aspects from the 64th to the 77th, the process comprises:
applying to each of said initial images or to each tagged image a different known error,
automatically tagging the respective different error and obtaining a series of further tagged images,
graphically manipulating each of said further tagged images for obtaining a plurality of further rendered images, each of which having a surface aspect corresponding to a real support where the initial images shall be printed,
wherein graphically manipulating each of said further tagged images comprises applying to each of said further tagged images one or more of the following maps:
an optical map defining a series of optical properties,
a structural map defining a series of structural properties,
a material map defining a series of properties related to the material of the support on which the printing may be performed,
a light map defining a series of illumination properties;
wherein each of said optical map, structural map, material map, light map is a filter configured for treating a sub-region of each further tagged image.

In a 79th aspect according to the preceding aspect, the process comprises:
iterating, for each property of each series of properties of a respective of said maps, the steps of:
   graphically manipulating each of said further tagged images for obtaining, from each of the further tagged images, a plurality of further rendered images having properties different to each other, and
   varying one or more properties of each series of properties of a respective of said maps, for generating from the same further tagged image a further rendered image,
wherein said further rendered images, obtained varying the properties of each series of properties of a respective of said maps applied to the further tagged images, are different to each other.

In an 80th aspect according to any one of the preceding aspects from the 64th to the 79th, generating, or collecting from at least one database of images, a series of initial digital images comprises generating, or collecting from at least one database of images, a plurality of series of initial digital images,
wherein each series of initial digital images of said plurality is obtained dividing an initial macro-image in units which define a respective initial image.

In an 81st aspect according to any one of the preceding aspects from the 64th to the 80th, the process comprises training the machine learning system using the one or more rendered images obtaining a trained machine learning system.

In an 82nd aspect according to the preceding aspect the digital printer comprises:
a printing station having one or more printheads configured for ejecting ink on sheet material,
an optical sensor operative downstream of said one or more printheads for generating one or more signals representative of an image printed on the sheet material,
a control unit connected to the optical sensor, wherein the trained machine learning system is installed on the control unit of the inkjet digital printer or on a computer system communicatively connectable with said control unit,
wherein the process includes:
   receiving by the control unit said one or more signals generated by the optical sensor,
   determining by the control unit one or more image samples of the printed image as a function of the signals received by the optical sensor,
   determining, using the trained machine learning system, an alarm condition depending on said one or more image samples by performing a comparison of said one or more image samples with said one or more rendered images.

In an 83rd aspect according to the 82nd aspect, subsequent to the determination of the alarm condition, the process provides for identifying, by the control unit, a defective nozzle of said printheads based on said alarm condition and commanding at least one of a deactivation of said defective nozzle and emission of an alarm signal.

In an 84th aspect a database comprising a plurality of rendered images (6) obtained by applying the process according to any one of the preceding aspects from the 64th to the 83rd is provided.

In an 85th aspect a computerized system for processing images is provided, including:
- at least one control unit, optionally at least one digital control unit, and
- at least one memory communicatively connected with at least one control unit which stores instructions, optionally in the form of one or more software programs,
wherein said instructions, when executed by said at least one control unit, program the computerized system for processing images to execute the process according to any one of the preceding aspects from the 64th to the 83rd.

In an 86th aspect a printing infrastructure is provided, including:
- a database (25) according to the 84th aspect,
- an inkjet digital printer (21) for printing on sheet materials (22), optionally on textile materials, said digital printer (21) comprising:
   ∘ a printing station (26) having one or more printheads (26a) configured to eject ink on the sheet material (22),
   ∘ at least one optical sensor (23), optionally a camera, operating downstream of said one or more printheads (26a) to generate one or more signals representative of an image printed on the sheet material (22),
   ∘ at least one control unit (50) connected to database (25) and configured to receive from said database (25) one or more rendered images (6), wherein the control unit (50) includes or communicates with a machine learning module (51) trained with said rendered images (6),
   wherein said control unit (50) is connected to the optical sensor (23) and configured for:
- receiving said one or more signals generated by the optical sensor (23),
- determining one or more images sampled as a function of the signals received by the optical sensor (23),
- determining an alarm condition as a function of said one or more sampled images.

In an 87thaspect according to the preceding aspect, the control unit (50) is configured to determine the alarm condition after a comparison, performed by the machine learning module (51), among said one or more sampled images with one or more images of said plurality of rendered images (6).

In an 88th aspect according to any one of the two preceding aspects, the infrastructure includes an emitter (24), optionally of visual or sound type, configured for reproducing an alarm signal.

In an 89th aspect according to the preceding aspect, the control unit (50), after the determination of the alarm condition, is configured for:
- commanding in deactivation said one or more printheads (26a) or of a defective nozzle of said one or more printheads, and/or
- commanding the emitter (24) for the reproduction of the alarm signal.

In a 90th aspect according to any one of the four preceding aspects, the machine learning module (51) of the control unit (50) includes one or more memories (52) to store said rendered images (6) received from the database (25).

In a 91st aspect according to any one of the five preceding aspects, the control unit (51), or another control unit of the infrastructure (20), is configured to perform the process according to any one of the preceding aspects from the 1st to the 55th and to, for example periodically or upon receipt of a command, update the database (25) with new rendered images obtained by performing said process.

In a last aspect according to any one of the preceding aspects, the process described in any one of the preceding process aspects is used during ink-jet printing of fibrous sheet material, for example textile material, fabric or non-woven fabric.

### BRIEF DESCRIPTION OF THE DRAWINGS

Some embodiments and aspects of the invention will be described below with reference to the accompanying drawings, provided for illustrative objects only and therefore not limiting wherein:

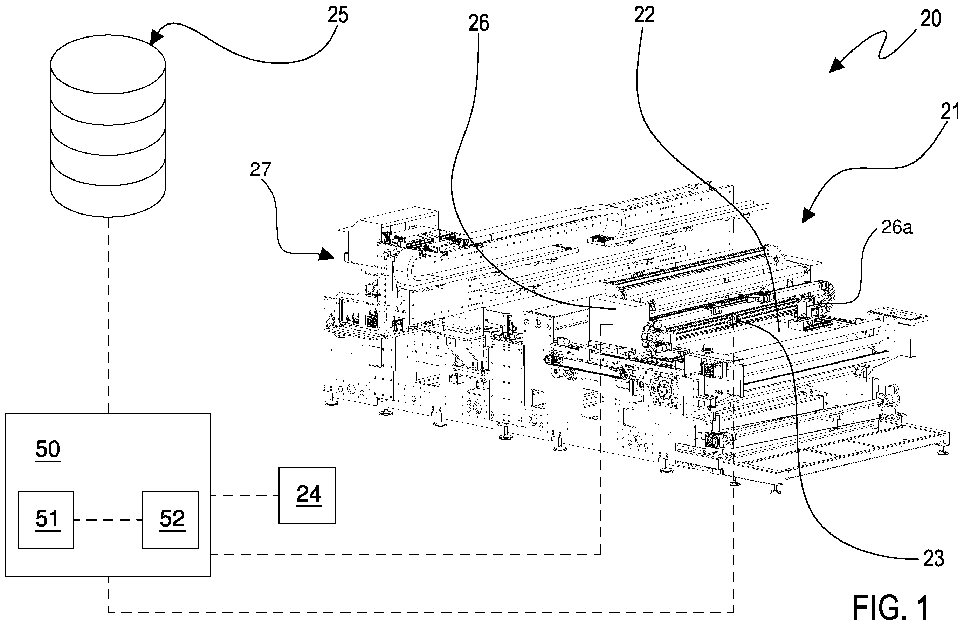

- Figure 1 is a view of a printing infrastructure according to the present invention;
- Figure 2 is a block diagram related to the process according to the present invention;
- Figure 3 shows an initial image and images with printing errors obtained by performing the process according to the present invention;
- Figures 4A and 4B are images with printing errors obtained as a result of performing the process according to the present invention;
- Figure 5A shows an optical map used by the process according to the present invention;
- Figure 5B shows a structural map used by the process according to the present invention;
- Figure 5C shows a material map used by the process according to the present invention;
- Figure 5D shows a light map used by the process according to the present invention;
- Figure 6 is a block diagram related to sub-steps of the process shown in Figure 2, according to further aspects of the present invention;
- Figures 7A, 7B, 8A, 8B are variants of images with printing errors obtained by performing the process according to the present invention;
- Figures 9A, 9B, 9C are images with different printing errors obtained by performing the process according to the present invention,
- Figure 10 is a block diagram showing further steps of the process that may follow those of figure 2, according to other aspects of the present invention.

### DEFINITIONS AND CONVENTIONS

Note that in the following detailed description corresponding parts illustrated in the various figures are shown with the same numerical references. The figures may illustrate the subject matter of the invention by means of representations that are not to scale; therefore, parts and components illustrated in the figures related to the subject matter of the invention may relate only to schematic representations.

The term ink refers to a mixture formed by a dispersion of pigments or a solution of dyes in an aqueous or organic medium intended to be transferred onto the surfaces of various materials to create one or more prints; transparent inks and paints are also included.

The term sheet material T refers to a material formed by a structure having two dimensions (length and width) that are predominant compared to a third dimension (thickness). Sheet material refers to both discrete sheets of limited length (for example, formats A0, A1, A2, A3, A4, or others) and continuous tapes of pronounced length that can be fed from a roll on which the sheet material is wound or come from an in-line printing phase. The sheet material described here has two sides, or main surfaces, on at least one of which printing is expected.

The term fibrous material refers to a material made with fibers of various kinds, such as paper, fabric, non-woven fabric, knitted fabric, or combinations of one or more of the aforementioned supports.

The term inkjet digital printing refers to printing that uses one or more printheads with nozzles to apply inks defining patterns, decorations, colors, and more onto sheet materials.

### CONTROL UNIT

The printing infrastructure described and claimed here includes at least one control unit responsible for controlling operating conditions performed by the printing infrastructure and/or controlling process steps.

The control unit can be a single unit or consist of a plurality of distinct control units depending on design choices and operational needs.

By control unit is meant an electronic component which may include at least one of: a digital processor (CPU), an analog circuit, or a combination of one or more digital processors with one or more analog circuits. The control unit can be "*configured*" or "*programmed*" to perform certain steps: this can be accomplished in practice by any means that allows the control unit to be configured or programmed. For example, in the case of a control unit comprising one or more CPUs and one or more memories, one or more programs may be stored in appropriate memory banks attached to the CPU(s); the program(s) contain instructions that, when executed by the CPU(s), program or configure the control unit to perform the operations described in relation to the control unit. Alternatively, if the control unit is/includes analog circuitry, then the circuitry of the control unit may be designed to include circuitry configured, in use, to process electrical signals in such a way as to perform the steps related to the control unit. Parts of the process described herein may be accomplished by means of a data processing unit, or control unit, that is technically substitutable for one or more electronic processors designed to execute a portion of a software program or firmware loaded onto a memory medium. Such software program may be written in any known programming language. The electronic processors, if two or more in number, may be interconnected by means of a data connection such that their computing powers are shared; the same electronic processors may thus be installed in even geographically different locations, realizing a distributed computing environment through the aforementioned data connection. The data processing unit, or control unit, can be a *general-purpose* processor configured to perform one or more parts of the process identified in the present invention through the software program or firmware, or be an ASIC or dedicated processor or FPGA, specifically programmed to perform at least part of the operations of the process described herein.

The memory medium may be non-transitory and may be internal or external to the processor, or control unit, or data processing unit, and may, specifically, be a memory located remotely from the electronic computer. The memory medium may also be physically divided into multiple portions, or in the form of a *cloud*, and the software program or firmware may be stored on portions of memory geographically separated from each other.

### DETAILED DESCRIPTION

### Process for automatic generation of images

The object of the present invention is a computer-implemented process for automatically generating a series of training images to be used to train a machine learning system. The machine learning system is a software program installed onboard a control unit of a digital printer 21 or installed on a remote server, for example a cloud-based server, communicatively connectable with the control unit of the digital printer 21. The machine learning system is responsible for identifying the presence of printing errors or defects made by the same digital printer 21. In other words, the machine learning system recognizes printing errors or defects on images printed on a sheet material 22 processed by the digital printer 21, such as paper, fabric, non-woven fabric, or leather. As previously mentioned, the process involves the automatic generation of synthetic images (alternatively referred to as artificial images) useful for training the machine learning system to recognize printing errors or defects made on the sheet material 22.

Note that the use of synthetic images for training the machine learning system automatically generates a large number of images (optionally more than 1000, but ideally infinite) to increase the accuracy and analysis of new images that were not used during training.

Additional benefits that are a consequence of training the machine learning system with synthetic images relate to an improved ability to recognize and classify different types of the printing errors. The more images are used for training, the greater the likelihood that the machine learning system will acquire a deep understanding of the various categories of printing errors. By using a large number of images, such as having different lighting conditions, angles, backgrounds and other variations, the machine learning system may be trained in a more comprehensive and representative way. Consequently, the robustness of the machine learning system may be increased, involving improved handling of the variations present in the images to be analyzed. Yet another benefit is to obtain more accurate and reliable models, improving performance in image analysis.

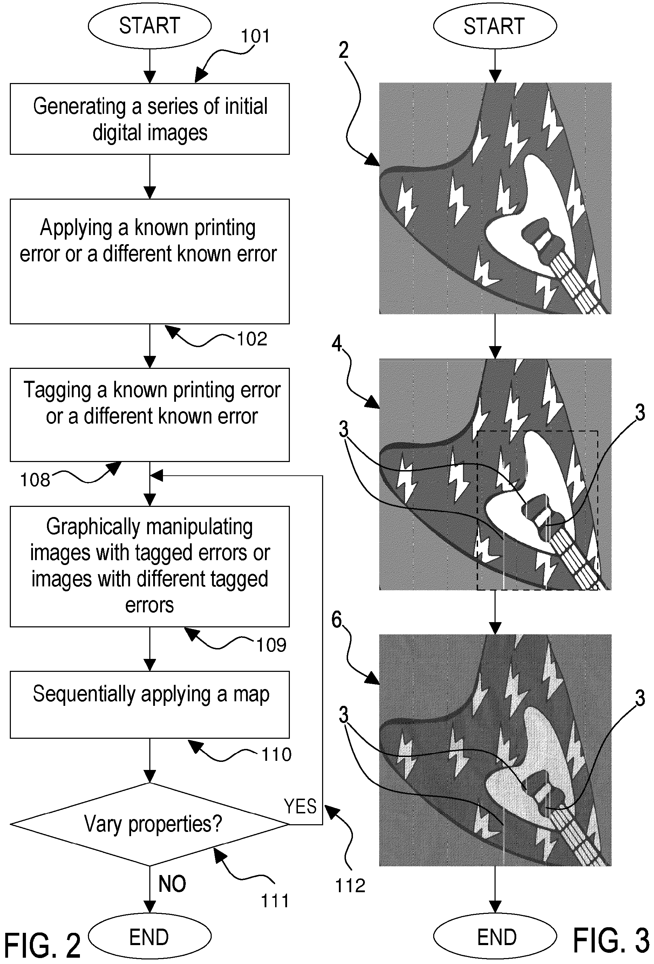

The automatic generation of a series of training images not only allows for more reliable machine learning systems for identifying printing errors, but further allows for minimizing the time associated with the preparation or generation of training images previously consisting of scans of real prints. Therefore, it is possible to avoid long and complex procedures of intentionally tampering with the digital printer 21 to obtain prints with errors for training the machine learning system, thereby also avoiding material waste and unnecessary energy costs. With reference to the block diagram in Figure 2, the process may include a step of generating, or collecting from one or more databases of images, a series of initial digital images 2 optionally having optimized size and resolution to be manipulated by the machine learning system (step 101). In one example, initial digital images 2, alternately referred to as "chunks", may be obtained by segmenting an initial macro-image into dimensionally smaller units. The macro-images may have pixel sizes of 6000x6000 or more, while the initial images 2 all have the same resolution (e.g., greater than 200 dpi) and size to allow efficient processing by the machine learning system. Note that each initial image 2 may be both a cyclic image, i.e., presenting terminal areas near respective sides that continue continuously on a respective opposite side, and also a flat image, i.e., free of three-dimensional effects or printing errors.

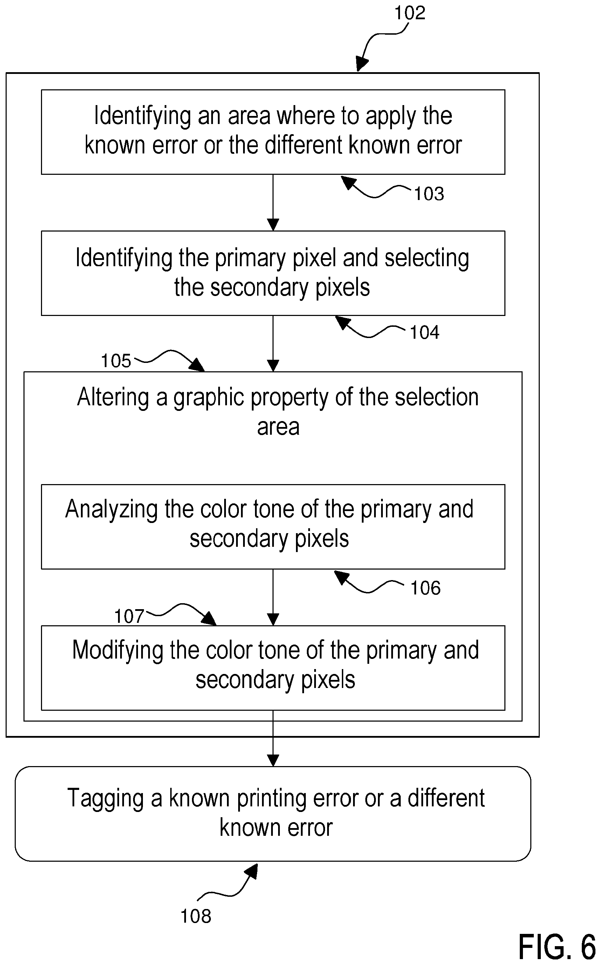

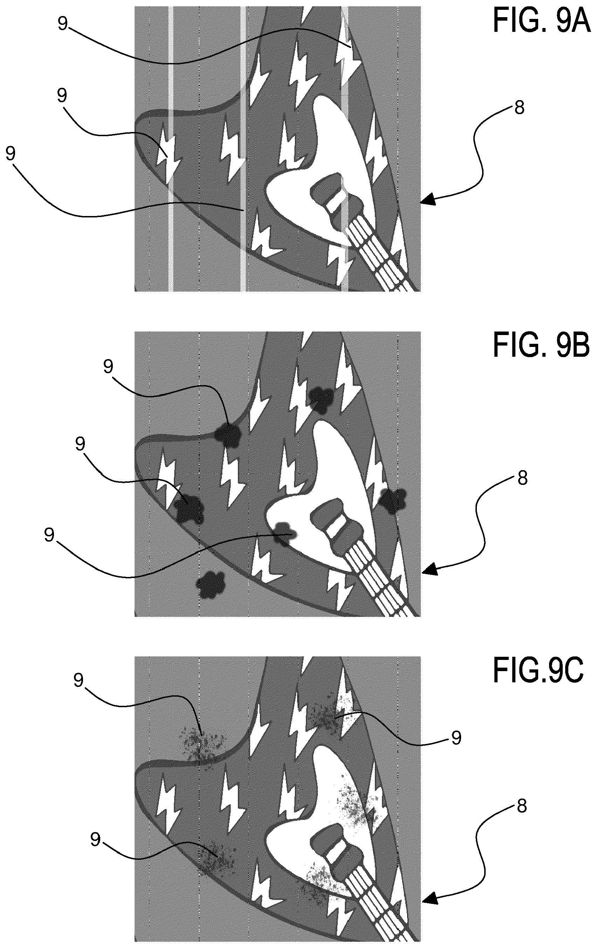

The process may also include a step 102 of applying to each initial images 2, at least one known printing error 3, which in Figures 3, 4A, 4B, 7A, 7B, 8A, and 8B, has been depicted, for example, with a white line to recreate an error resulting from clogging of at least one nozzle for dispensing ink. In the following description, with reference to Figure 6, details will be provided regarding the creation of the printing error 3 shown in the above figures, and subsequently, printing errors of different nature will be presented (Figures 9A-9C).

The process may further include an additional step of automatically tagging, in each initial images 2 , at least one known printing error 3 resulting in a series of images 4 (also herein referred to as tagged images) with a respective tagged error (step 108). This step allows identification of the type of the printing error, its position relative to a reference system, the extent of the known printing error, and/or the extent of the selection area 5. Note that the step of automatically tagging known printing errors has several advantages, such as greatly reducing the time and effort required to tag large datasets, thus accelerating the training of the machine learning system. Automation of the tagging phase ensures greater consistency and uniformity in assigned tags, minimizing human error and any discrepancies between images, thereby improving the quality and reliability of the model by avoiding human errors.

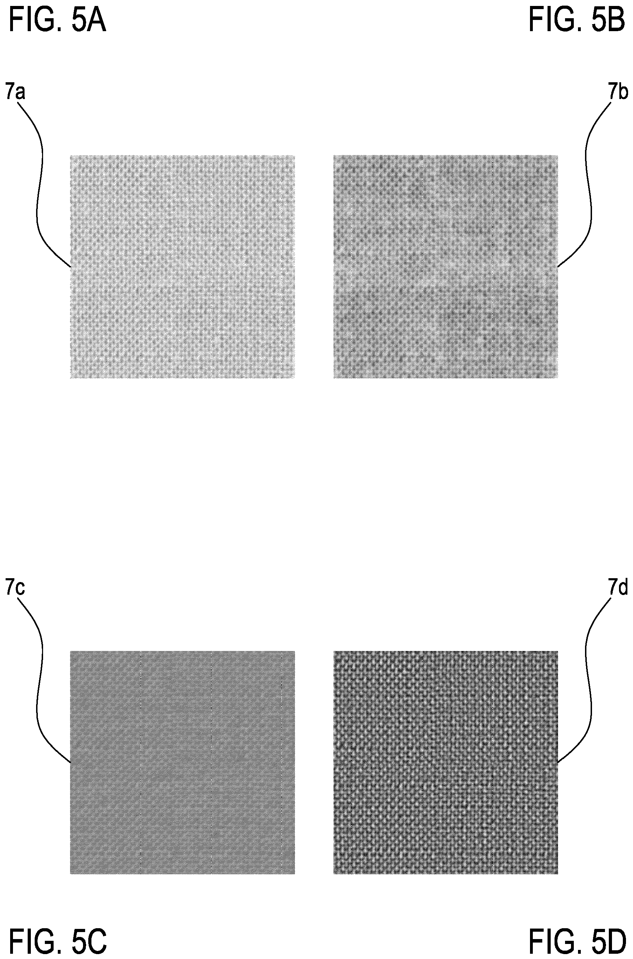

The process may then include a step 109 of graphically manipulating each image with tagged errors 4 to obtain a respective rendered image 6 having realistic properties or having a surface appearance corresponding to that of a real support, for example of sheet material 22, on which the initial images 2 are to be printed. Such a step of graphically manipulating each image may involve applying to an image with tagged error 4, maps representative of different physical characteristics of the sheet material 22 on which printing may be performed. Each map is a two-dimensional representation or filter configured to process a sub-region of each image with tagged errors 4. Manipulation of images with tagged errors 4 may involve sequentially applying a respective map to adjacent regions of the same image with tagged errors 4 until it is completely covered (step 110). In an example shown in Figures 5A-5D, the process may involve applying to each image with tagged errors 4, at least one of:
- an optical map 7a defining a series of optical properties including at least one of: reflection, diffusion, transparency and distortion;
- a structural map 7b defining a series of structural properties including at least one of: material thickness, roughness and porosity;
- a material map 7c defining a series of properties related to the material of the support on which printing may be performed including at least one of: textile material, leather, paper, wood;
- a light map 7d defining a series of illumination properties including at least one of: shading and luminosity. In one embodiment at least the optical map and structural map are applied. In another embodiment at least the optical map, structural map, and material map are applied. In another embodiment all four maps listed above are applied.

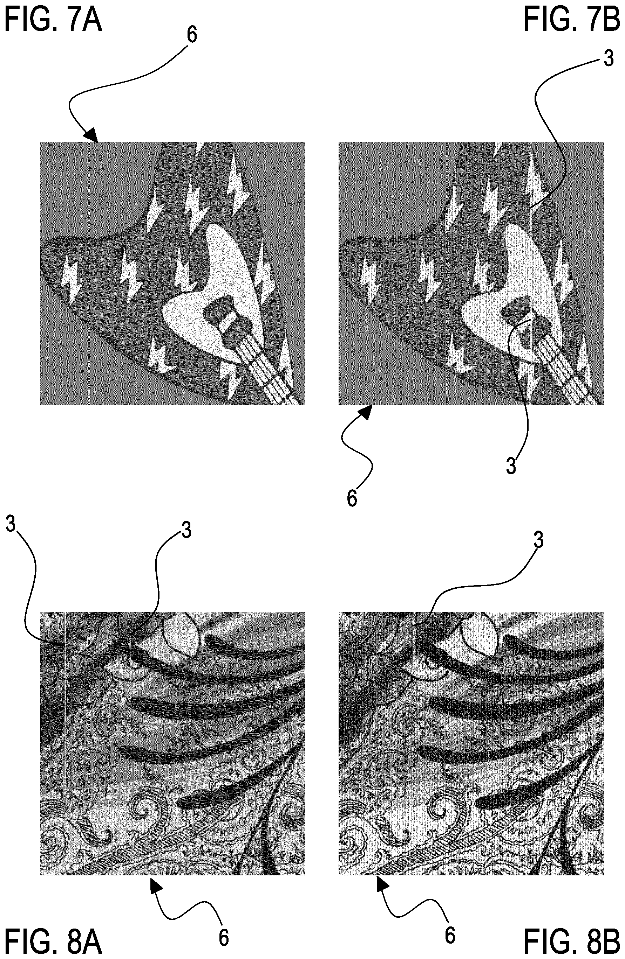

The process may subsequently involve a step 111 of varying, optionally in a random manner, one or more properties of each series of properties of a respective map, to obtain from the image with tagged errors 4, a further rendered image 6. The step of varying the properties of maps 7a-7d, may then involve repeating the step of graphically manipulating the images with tagged errors, as indicated by the return line 112 in the block diagram in Figure 2. In one example, the step of varying 111 may involve changing the incidence of at least one or each of the optical properties (reflection, diffusion, transparency, and distortion properties), while keeping the structural properties, material properties and illumination properties unchanged or changing them accordingly. By doing so it is possible to generate, starting from the same image with tagged errors 4, different rendered images 6 having different aspects in terms of optical perception. In yet another example it is then possible, from the same image with errors tagged errors 4, to obtain images having different surface aspects depending on the material of the support where they shall be printed. In this regard, see for example Figures 7A and 8A, which simulate printing on leather, while Figures 7B and 8B simulate printing on a spun material, e.g., fabric, having coarse-grained meshes.

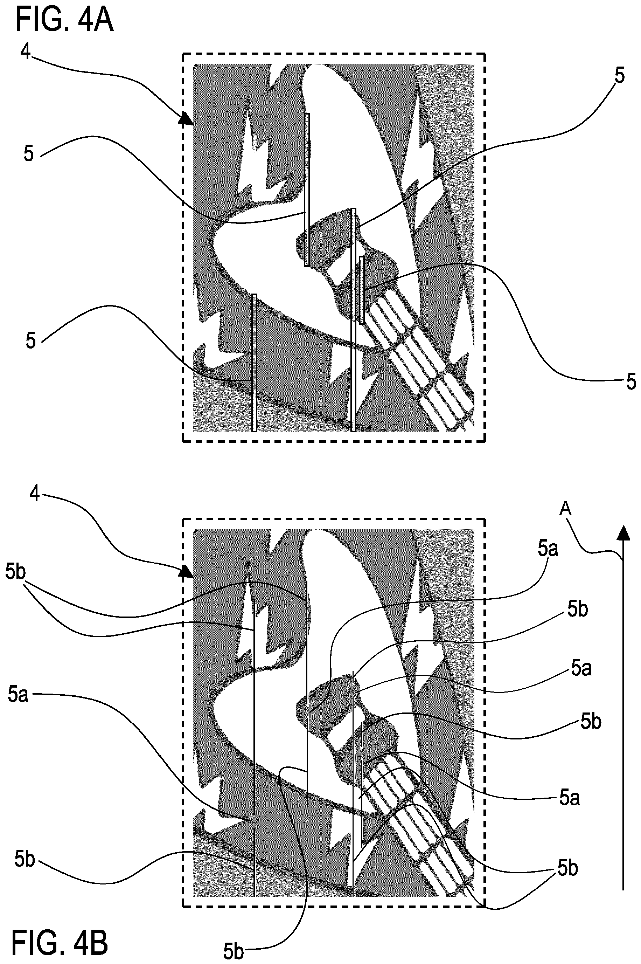

As previously mentioned and with reference to the block diagram in Figure 6, the sub-steps (of step 102) performed by the process for the implementation of printing errors shown in Figures 3, 4A, 4B, 7A, 7B, 8A and 8B will be presented below. In one example, the application of a known printing error may initially involve a sub-step 103 of identifying, in each initial images 2, a selection area 5 where the known printing error is applied (Figure 4A). This identification may be done by performing a manual process performed by an operator or it may be implemented in an automatic manner by randomly identifying a primary pixel 5a (Figure 4B) present within the selection area 5 and then, select one or more secondary pixels 5b related to the primary pixel 5a (step 104). In case of error caused by clogging of a print nozzle, the step of selecting secondary pixel 5b includes selecting one or more pixels aligned with the primary pixel 5a parallel to an extension direction A of the selection area 5.

The process may subsequently involve a sub-step 105 of altering at least one graphic property of the image included within the selection area 5, for example by changing the color tone of one or more pixels defining the portion of the image enclosed in the selection area 5. Such a sub-step may, for example, include an initial step of analyzing and optionally determining the color tone of the primary and secondary pixels 5a, 5b included in the selection area 5 (step 106), and then altering their color tone by inserting pixels having a different color tone from the color tone of the primary and secondary pixels 5a, 5b of the initial image 2 (step 107).

The process may further involve a step of applying to the initial images or a respective image with tagged errors, a different known error 9 (Figures 9A-9C) representative of additional malfunctions that may involve nozzles or entire printheads of the digital printer. In one example, Figure 9A represents, by means of a white band, an error that can be obtained when there is a malfunction associated with an entire printhead failing to deliver ink. In a further example, Figure 9B represents, with darker colored spots, errors that can occur due to incorrect ink dispensing by one or more print nozzles. Such an error may, for example, be caused by a sudden change in voltage supply to the nozzle, which results in dispensing an amount of ink greater than normal. In yet another example, Figure 9C shows dark-colored cloudy areas representative of errors that can occur due to partial occlusion of print nozzles.

The step of applying a different known error 9 may involve iterating the previously mentioned steps 108-111, wherein the process tags the introduced errors to determine tagged images with different known errors 8, manipulates the new images with different tagged errors 8, and applies one or more of the maps 7a-7d to obtain a rendered image 6 having a realistic appearance. The process may again involve varying the properties of the maps 7a-7d to obtain further rendered images 6 of the same image with different errors tagged errors 8.

In a further example, the present disclosure also concerns use of the machine learning system trained with the rendered images generated as previously described in the context of an inkjet digital printing process for real-time detection and management of printing errors, ensuring improved output and operational efficiency. The process may be performed by a control unit 50, onboard the printer which may host the machine learning system. Alternatively, the process may be performed by the control unit 50 of the printer 21 in cooperation with a machine learning system as above described hosted on a server in communication with control unit 50.

In an example, the inkjet digital printer 21 includes a printing station 26 with one or more printheads 26a configured to deliver ink onto various sheet materials, including paper, fabric, non-woven fabric, and leather. Located downstream of the printheads 26a, the inkjet digital printer 21 includes an optical sensor 23 that generates signals representing the printed images on the sheet material, which are used for subsequent error detection and correction.

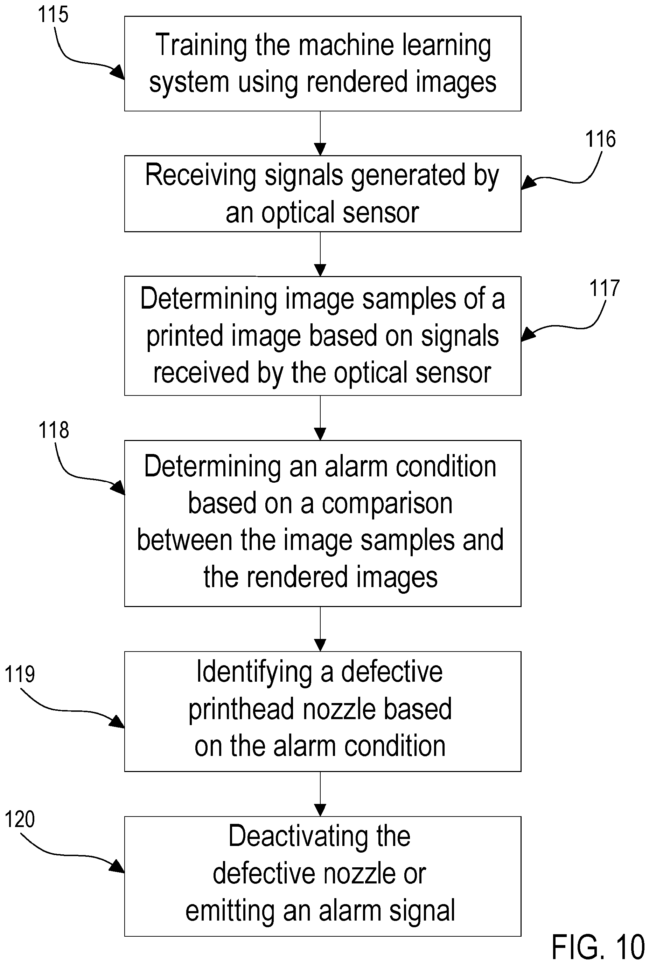

Turning to the description of the process with reference to Figure 10, it involves training the machine learning system using the rendered images or the further rendered images (step 115). Once the training phase is complete, the functionalities of the machine learning system may be integrated into the printing process. During printing, the optical sensor generates signals representative of the image printed on the sheet material (step 116), based on which one or more image samples of the printed image are determined (step 117).

The process further includes determining an alarm condition (step 118) by comparing the image samples with the rendered images previously used for training the machine learning system. If discrepancies are detected, indicating potential printing errors, the alarm condition is triggered.

Upon determining the alarm condition, the process may identify the specific defective nozzle of the printheads responsible for the error (step 119). Depending on the nature and severity of the defect, the process may involve deactivating the defective nozzle or emitting an alarm signal to alert operators that a printing error has occurred (step 120).

### Printing infrastructure

Reference number 20 indicates a digital printing infrastructure that can be used for inkjet printing on a sheet material 22, optionally fibrous, such as paper, fabric, or non-woven fabric. However, the possibility of employing the printing infrastructure subsequently described for printing surfaces made from a material of another nature, such as metal or leather, is not excluded.

The printing infrastructure may include a database 25 comprising a plurality of rendered images 6 obtained by applying the process for generating training images previously described. The rendered images 6 may be physically on a cloud medium or may be stored on an onboard storage medium of a digital printer 21 subsequently described. In one example, the printing infrastructure 20 includes a digital printer 21 having a feeding station 27 adapted to supply and deposit sheet material 22 onto a conveyor belt responsible for moving it in the direction of a printing station 26 or otherwise adapted to convey the material to be printed at the printing station 26. In one example, the printing station 26 includes one or more printheads 26a configured to deliver ink onto sheet material 22 and thus perform inkjet printing on the sheet material. Printheads may be placed on one side of the sheet material to be printed or on both sides when there is a need to print the sheet material on both sides. The digital printer 21 may further include an optical sensor 23 positioned downstream of the printing station 26 with respect to the feeding station 27, configured to generate one or more signals representative of an image printed on the sheet material 22. In one example, the optical sensor 23 includes a camera directed toward the sheet material to capture images related to a portion of the sheet material 22 where printing has occurred. The digital printer 21 may also include a control unit 50 connected to the optical sensor and configured to receive signals generated by the optical sensor. In one example, the control unit 50 may be configured to determine one or more sampled images based on signals received from the optical sensor 23 to be analyzed by a machine learning module 51 for recognizing printing errors. In an example, the control unit 50 may be connected to the database 25 to receive one or more rendered images 6, store them in one or more memories 52 and train the same machine learning module 51. The control unit 50, when the machine learning module 51 recognizes a printing error on one or more of the sampled images, is further configured to determine an alarm condition in which it deactivates each printheads 26a and commands an emitter 24 to reproduce a visual or audible alarm signal to alert the user of a malfunction on the digital printer 21.

In a further aspect, the control unit 51, or another control unit part of the infrastructure 20, may be configured to perform the process of generating images with errors as described above and subsequently, for example periodically or upon receipt of a command, update the database 25 with new rendered images 6 obtained by applying the mentioned process for generating training images.

## Claims

1. Computer implemented process of automatic generation of a series of training images, wherein said series of training images is configured for training a machine learning system for image recognition, installed on or connected to a digital printer (21),
said process comprising the steps of:
- generating, or collecting from at least one database of images, a series of initial digital images (2),
- applying to each of said initial images at least one known printing error (3),
- for each of said initial images (2), automatically tagging the at least one known printing error (3) obtaining a series of images (4) with a respective tagged error,
- graphically manipulating each of said images with tagged errors (4) for obtaining, from each of the images with tagged errors (4), a plurality of rendered images (6).

2. Process according to the preceding claim, wherein applying to each of said initial images the at least one known printing error (3) comprises the steps of:
- identifying, optionally in a random manner, in each initial image (2), a selection area (5) where applying the known printing error,
- altering at least one graphic property, optionally the color tone of one or more pixels defining the portion of the image enclosed in the selection area (5), of said selection area (5).

3. Process according to the preceding claim, wherein identifying in each initial image (2), the selection area (5) where applying the error comprises the sub-steps of:
- identifying, in a random manner, a primary pixel (5a) in each of the initial digital images,
- selecting one or more secondary pixels (5b), correlated to each other and to the primary pixel (5a), optionally wherein the step of selecting said one or more secondary pixels (5b) comprises selecting one or more pixels aligned to the primary pixel parallel to a direction of extension (A) of the selection area (5).

4. Process according to any one of the two preceding claims, wherein altering the at least one graphic property of said selection area (5) comprises the steps of:
- analyzing a color tone of the primary and secondary pixels (5a, 5b) comprised in the selection area (5),
- modifying the color tone of one or more of said primary and secondary pixels (5a, 5b) whose color tone has been analyzed for applying the error in the selection area (5), inserting pixels having color tone different from the color tone of the pixels of the initial image (2).

5. Process according to any one of the preceding claims, wherein tagging at least one known printing error (3) comprises identifying at least one, optionally all, of: typology of the printing error, position with respect to a reference system, extension of the known printing error (3), optionally extension of the selection area (5).

6. Process according to any one of the preceding claims, wherein each of said rendered images has realistic properties or has a surface aspect corresponding a real support where the initial images (2) shall be printed.

7. Process according to any one of the preceding claims, wherein graphically manipulating each of said images with tagged errors (4) comprises applying to each of the images one or more of the following maps:
- an optical map (7a) defining a series of optical properties,
- a structural map (7b) defining a series of structural properties,
- a material map (7c) defining a series of properties related to the material of the support on which the printing may be performed,
- a light map (7d) defining a series of illumination properties,
wherein said series of optical properties comprises at least one of the following properties: reflection, diffusion, transparency and distortion;
wherein said series of structural properties comprises at least one of the following properties: thickness of the material, roughness and porosity;
wherein said series of properties related to the material of the support on which the printing may be performed comprises at least one of the following properties: textile material, leather, paper, wood;
wherein said series of illumination properties comprises at least one of the following properties: shading and luminosity,
wherein graphically manipulating each of said images with tagged errors (4) comprises applying to each of said images with tagged errors (4), at least one of the optical map (7a), the structural map (7b), the material map (7c) and the light map (7d), optionally all the maps,
wherein each map is a filter configured for treating a sub-region of each image with tagged errors (4).

8. Process according to claim 7, wherein graphically manipulating each of said images with tagged errors (4) through one or more maps, comprises applying sequentially a respective map on adjacent regions of said image with tagged errors (4) until complete coverage of the image with tagged errors (4).

9. Process according to claim 7 or 8 comprising:
- a step of varying, optionally in a random manner, one or more properties of each series of properties of a respective map, for obtaining from the same image with tagged errors (4) a further rendered image (6),
- a step of iterating, for each property of each series of properties of a respective of said maps, the steps of:
∘ graphically manipulating each of said images with tagged errors (4) for obtaining, from each of the images with tagged errors (4), a plurality of rendered images (6), and
∘ varying, optionally in a random manner, one or more properties of each series of properties of a respective of said maps, for generating from the same image with tagged errors (4), a further rendered image,
wherein the further rendered images (6) obtained varying the properties of each series of properties of a respective of said maps applied to images with tagged errors (4), are different to each other.

10. Process according to any one of the preceding claims comprising a step of:
- applying to each of said initial images (2), optionally to each image with tagged errors (4), at least one different known error (9) of a series of different known errors,
- for each of said initial images (2), optionally for each image with tagged error, tagging the respective different error (9) of said series of different known errors, obtaining a further series of images (8) with the respective different tagged error,
- graphically manipulating each of said images with different tagged errors (8) for obtaining from each of the images with different tagged errors (8), a plurality of rendered images (6), each of which having realistic properties or having a surface aspect corresponding to the ones of a real support where the images with different tagged errors (8) shall be printed,
wherein graphically manipulating each of said images with different tagged errors (8) comprises applying to each of said images with different tagged errors (8), at least one of:
- an optical map (7a) defining a series of optical properties,
- a structural map (7b) defining a series of structural properties,
- a material map (7c) defining a series of properties related to the material of the support on which the printing may occur,
- a light map (7d) defining a series of illumination properties,
optionally wherein graphically manipulating each of said images with different tagged errors (8) comprises applying all the maps to each of said images with different tagged errors (8),
wherein each map is a filter configured for treating a sub-region of each image with different tagged errors (8),
wherein graphically manipulating each of said images with different tagged errors (8) through one or more maps, comprises sequentially applying a respective map on adjacent regions of said image with different tagged errors (8) until complete coverage of the image with different tagged errors (8).

11. Process according to the preceding claim comprising a step of varying, optionally in a random manner, one or more properties of each series of properties of a respective map, for obtaining from the same image with different tagged errors (8), a further rendered image,
wherein the process comprises a step of iterating, for each property of each series of properties of a respective map, the steps of:
- graphically manipulating each of said images with different tagged errors (8) for obtaining, from each of the images with different tagged errors (8), a plurality of rendered images (6) having properties different to each other, and
- varying, optionally in a random manner, one or more properties of each series of properties of a respective map, for generating from the same image with different tagged errors (8) a further rendered image,
wherein said further rendered images (6) obtained varying the properties of each series of properties of a respective map applied to images with different tagged errors (8), are different to each other.

12. Process according to any one of the preceding claims, wherein each image of said series of initial digital images (2) is an image devoid of three-dimensional effects and/or printing errors (3), optionally wherein each image of said series of initial digital images (2) is a flat image,
more optionally wherein each image of said series of initial digital images (2) has resolution higher than 200 dpi, for example comprised between 250 dpi and 100000 dpi,
wherein each image of said series of initial digital images (2) is a cyclic image having ending zones in proximity of respective sides which proceed with continuity on a respective opposite side,
wherein the series of initial digital images (2) comprises a number of images greater than 1000, optionally comprised between 10000 and 100000, different to each other.

13. Process according to any one of the preceding claims, wherein generating, or collecting from at least one database of images, a series of initial digital images comprises generating, or collecting from at least one database of images, a plurality of series of initial digital images (2),
wherein each series of initial digital images of said plurality is obtained dividing an initial macro-image in units which define a respective initial image (2).

14. Process according to any one of the preceding claims comprising training the machine learning system using the one or more rendered images obtaining a trained machine learning system.

15. Process according to claim 14, wherein the digital printer comprises:
a printing station having one or more printheads configured for ejecting ink on sheet material,
an optical sensor operative downstream of said one or more printheads for generating one or more signals representative of an image printed on the sheet material,
a control unit connected to the optical sensor, wherein the trained machine learning system is installed on the control unit of the inkjet digital printer or on a computer system communicatively connectable with said control unit,
wherein the process includes:
receiving by the control unit said one or more signals generated by the optical sensor,
determining by the control unit one or more image samples of the printed image as a function of the signals received by the optical sensor,
determining, using the trained machine learning system, an alarm condition depending on said one or more image samples by performing a comparison of said one or more image samples with said one or more rendered images.

16. Process according to claim 15, wherein, subsequent to the determination of the alarm condition, the process provides for identifying, by the control unit, a defective nozzle of said printheads based on said alarm condition and commanding at least one of a deactivation of said defective nozzle and emission of an alarm signal.
